# EUROPEAN PATENT APPLICATION

(11) **EP 4 386 682 A1**
(43) Date of publication of application: **19.06.2024**
(21) Application number: 22875045.1
(22) Date of filing: 29.09.2022
(51) Int. Cl.: G06T 15/06, G06T 1/60

(54) **IMAGE RENDERING METHOD AND RELATED DEVICE THEREOF**

(30) Priority: 30.09.2021 CN 202111163949
(71) Applicant: Huawei Technologies Co., Ltd., Shenzhen, Guangdong 518129 (CN)
(72) Inventor: YU, Xiaofeng, Shenzhen, Guangdong 518129 (CN); SHI, Xindong, Shenzhen, Guangdong 518129 (CN); LIU, Chang, Shenzhen, Guangdong 518129 (CN)
(74) Representative: Pfenning, Meinig & Partner mbB
(86) International application number: PCT/CN2022/122427
(87) International publication number: WO 2023/051662

(57) **Abstract**

This application provides an image rendering method and a related device, to effectively reduce a quantity of times that any piece of material information is swapped in and out between a memory and a cache, thereby reducing a memory bandwidth and optimizing performance of an electronic device. The method in this application includes S1: performing ray tracing-based intersection calculation based on space information of a reflective object and space information of a reflected object to obtain M intersecting points on the reflected object, where the reflected object corresponds to a plurality of pieces of material information, and M ≥ 1; and S2: determining, in the M intersecting points, a plurality of intersecting points corresponding to target material information, and performing shading based on the target material information and space information of the plurality of intersecting points corresponding to the target material information, to obtain an image of a reflection that is of the reflected object and that is in the reflective object, where the target material information is one of the plurality of pieces of material information.

## Description

This application claims priority to Chinese Patent Application No. 202111163949.X, filed with the China National Intellectual Property Administration on September 30, 2021 and entitled "IMAGE RENDERING METHOD AND RELATED DEVICE", which is incorporated herein by reference in its entirety.

### TECHNICAL FIELD

This application relates to the field of computer graphics technologies, and in particular, to an image rendering method and a related device.

### BACKGROUND

With rapid development of the computer industry, users impose increasingly high requirements on images. Currently, a rasterization technology is usually used in combination with a ray tracing technology to render a three-dimensional scene, to obtain a relatively vivid image, thereby improving user experience.

In general, a three-dimensional scene usually includes a reflective object (for example, a ground) and a plurality of reflected objects (a person, a chair, and the like on the ground). After a graphics processing unit (graphics processing unit, GPU) receives space information of the reflective object, material information of the reflective object, space information of the plurality of reflected objects, material information of the plurality of reflected objects, and other rendering information of a three-dimensional scene that are sent by a central processing unit (central processing unit, CPU), the GPU may perform intersection calculation by using the space information of the reflective object and the space information of the plurality of reflected objects, to determine a plurality of intersecting points located on the plurality of reflected objects. Each time one intersecting point is determined, the GPU may perform shading based on space information of the intersecting point and material information of a reflected object on which the intersecting point is located. In this way, after shading operations corresponding to all the intersecting points are completed, an image of a reflection in the reflective object (for example, a figure on the ground) can be obtained. At this point, ray tracing-based image rendering is completed.

However, a cache (cache) of the GPU can usually cache only one piece of material information. In the plurality of reflected objects, some reflected objects may correspond to a same piece of material information. Therefore, when the GPU successively completes the shading operations corresponding to the plurality of intersecting points on the plurality of reflected objects, the same piece of material information is usually frequently swapped in and out between a memory and the cache, resulting in an excessively large memory bandwidth that is difficult for an electronic device to support.

### SUMMARY

Embodiments of this application provide an image rendering method and a related device, to effectively reduce a quantity of times that any piece of material information is swapped in and out between a memory and a cache, thereby reducing a memory bandwidth and optimizing performance of an electronic device.

A first aspect of embodiments of this application provides an image rendering method. The method includes the following:
A CPU may obtain rendering information of a three-dimensional scene. Because the three-dimensional scene usually includes a reflective object (for example, a ground and the like) and N reflected objects (for example, a person, a table, a chair, and the like), the CPU may divide the rendering information of the three-dimensional scene into rendering information of the reflective object and rendering information of the N reflected objects. Then, the CPU sends the rendering information of the reflective object (including space information and material information of the reflective object) and the rendering information of the N reflected objects (including space information and material information of the N reflected objects) to a GPU, so that the GPU carries out a ray tracing stage of image rendering, that is, performs the following steps:
S1: The GPU performs ray tracing-based intersection calculation based on the space information of the reflective object and the space information of the N reflected objects to obtain M intersecting points on the N reflected objects. It should be noted that the N reflected objects are objects that intersect a ray (from a camera) that passes through the reflective object. At least one intersecting point exists on each of the N reflected objects. Therefore, M ≥ N ≥ 1. Further, the N reflected objects correspond to P pieces (types) of material information. If each of the P pieces of material information corresponds to at least one of the N reflected objects, N > P > 1. If each of the P pieces of material information corresponds to one of the N reflected objects, N = P > 1. If each of the N reflected objects corresponds to at least one of the P pieces of material information, N < P, and P > 1. For example, it is assumed that the three-dimensional scene includes a person, a chair, a table, and the like, and the chair and the table are made of a same material. In this case, material information of the person is material information 1, and material information of the chair and the table is material information 2.
S2: The GPU determines, in the M intersecting points, a plurality of intersecting points corresponding to target material information, and performs shading based on the target material information and space information of the plurality of intersecting points corresponding to the target material information, to obtain an image of a reflection that is of the reflected object and that is in the reflective object. (For example, the image of the reflection that is of the reflected object and that is in the reflective object includes an image of a shadow of the person on the ground, an image of a shadow of the table on the ground, an image of a shadow of the chair on the ground, and the like.)

It may be learned from the foregoing method that, after performing ray tracing-based intersection calculation based on the space information of the reflective object and the space information of the N reflected objects, the GPU can obtain the M intersecting points on the N reflected objects, and the N reflected objects correspond to the P pieces of material information. Then, the GPU determines, in the M intersecting points, all intersecting points corresponding to the target material information, and performs shading based on the target material information and space information of all the intersecting points corresponding to the target material information, to obtain the image of the reflection that is of the reflected object and that is in the reflective object. In the foregoing process, the GPU separates intersection calculation and shading in ray tracing for execution. To be specific, after centrally determining the M intersecting points, for a specific piece of material information in the P pieces of material information, the GPU may determine all intersecting points corresponding to the material information, and complete shading operations corresponding to these intersecting points. Therefore, the GPU no longer needs to use the material information in a subsequent shading operation corresponding to a remaining intersecting point in the M intersecting points. In this way, a quantity of times that any piece of material information is swapped in and out between a memory and a cache can be effectively reduced, thereby reducing a memory bandwidth and optimizing performance of an electronic device.

In a possible implementation, the target material information is an i^{th} piece of material information, an initial value of i is 1, and S2 includes S21: determining, in the M intersecting points, a plurality of intersecting points corresponding to the i^{th} piece of material information, and performing shading based on the i^{th} piece of material information and space information of the plurality of intersecting points corresponding to the i^{th} piece of material information; and S22: letting i = i + 1, and re-performing S21, until i = P, to obtain the image of the reflection that is of the reflected object and that is in the reflective object. Specifically, after obtaining the M intersecting points, the GPU may determine, in the M intersecting points, an intersecting point corresponding to a 1^{st} piece of material information in the P pieces of material information, and perform shading based on the 1^{st} piece of material information and space information of the intersecting point corresponding to the 1^{st} piece of material information. Then, the GPU may also perform, on a 2^{nd} piece of material information, an operation same as that performed on the 1^{st} piece of material information, until the operation same as that performed on the 1^{st} piece of material information is completed on a P^{th} piece of material information. Therefore, the GPU can successfully obtain the image of the reflection in the reflective object by rendering. In the foregoing implementation, after performing ray tracing-based intersection calculation based on the space information of the reflective object and the space information of the N reflected objects, the GPU can obtain the M intersecting points on the N reflected objects, and the N reflected objects correspond to the P pieces of material information. Then, in the M intersecting points, the GPU determines the intersecting point corresponding to the 1^{st} piece of material information, and performs shading based on the 1^{st} piece of material information and the space information of the intersecting point corresponding to the 1^{st} piece of material information. Then, the GPU may also perform, on the 2^{nd} piece of material information, the operation same as that performed on the 1^{st} piece of material information, until the operation same as that performed on the 1^{st} piece of material information is completed on the P^{th} piece of material information. In this way, the GPU can successfully obtain the image of the reflection that is of the reflected object and that is in the reflective object by rendering. In the foregoing process, the GPU separates intersection calculation and shading in ray tracing for execution. To be specific, after centrally determining the M intersecting points, for any of the P pieces of material information, the GPU may determine all intersecting points corresponding to the material information, and complete shading operations corresponding to these intersecting points. Therefore, the GPU no longer needs to use the material information in a subsequent shading operation corresponding to a remaining intersecting point in the M intersecting points. In this way, a quantity of times that any piece of material information is swapped in and out between a memory and a cache can be effectively reduced, thereby reducing a memory bandwidth and optimizing performance of an electronic device.

In a possible implementation, S21 includes S211: if a reflected object on which a j^{th} intersecting point is located corresponds to the i^{th} piece of material information, performing shading based on the i^{th} piece of material information and space information of the j^{th} intersecting point, to obtain a j^{th} pixel in an image of a reflection in the reflective object, where an initial value of j is 1; and S212: letting j = j + 1, and re-performing S21, until j = M. In the foregoing implementation, for any of the P pieces of material information, the GPU may process the material information and space information of the M intersecting points. Specifically, the GPU may determine whether a reflected object on which a 1^{st} intersecting point in the M intersecting points is located corresponds to the material information. If the reflected object on which the 1^{st} intersecting point is located corresponds to the material information, shading is performed based on the material information and space information of the 1^{st} intersecting point, to obtain a 1^{st} pixel in an image of a reflection in the reflective object. If the reflected object on which the 1^{st} intersecting point is located does not correspond to the material information, the process ends. Afterwards, the GPU may perform, on a 2^{nd} intersecting point, an operation same as that performed on the 1^{st} intersecting point, until the operation same as that performed on the 1^{st} intersecting point is completed on an M^{th} intersecting point. For remaining material information in the P pieces of material information, the GPU may also perform the foregoing process, to successfully obtain the image of the reflection in the reflective object.

In a possible implementation, S1 includes determining, based on space information of a camera, the space information of the reflective object, and a bounding volume hierarchy BVH tree, M intersecting points obtained after a ray from the camera passes through the reflective object and acts on the N reflected objects, where the BVH tree is constructed based on the space information of the N reflected objects. In the foregoing implementation, the GPU fully separates intersection calculation and shading in ray tracing, and first centrally performs intersection calculation to obtain the M intersecting points obtained on the N reflected objects, thereby helping optimize an entire ray tracing process.

In a possible implementation, the N reflected objects each have a unique serial number in the BVH tree, and S211 includes: if a serial number of the reflected object on which the j^{th} intersecting point is located is in a serial number of at least one reflected object corresponding to the i^{th} piece of material information, performing shading based on the i^{th} piece of material information and the space information of the j^{th} intersecting point. In the foregoing implementation, for any of the P pieces of material information and any of the M intersecting points, the GPU may determine whether a serial number of a reflected object on which the intersecting point is located is in serial numbers of all reflected objects corresponding to the material information. If yes, shading is performed based on the material information and space information of the intersecting point; or if no, the process ends. In this manner, it can be accurately determined whether a specific intersecting point corresponds to a specific piece of material information.

In a possible implementation, the method further includes S4: performing rasterization based on the space information of the reflective object and the material information of the reflective object to obtain an image of the reflective object; S5: performing rasterization based on the space information of the N reflected objects and the material information of the N reflected objects to obtain images of the N reflected objects; and S6: fusing the image of the reflective object, the images of the N reflected objects, and the image of the reflection in the reflective object to obtain a target image. In the foregoing implementation, after obtaining the rendering information of the reflective object (including the space information of the reflective object and the material information of the reflective object) and rendering information of all reflected objects (including space information of all the reflected objects and material information of all the reflected objects), the GPU may further perform rasterization based on this information, to obtain the image of the reflective object and the images of the N reflected objects. Then, the GPU further fuses the image of the reflective object, the images of the N reflected objects, and the image of the reflection in the reflective object to obtain a target image that simulates the three-dimensional scene. At this point, image rendering of the three-dimensional scene is completed. Afterwards, the CPU may obtain the target image from a buffer, and send the target image to a screen for display, so that a user views the target image.

In a possible implementation, the space information includes at least one of the following: vertex coordinates, a vertex normal line, and a triangle index.

In a possible implementation, the material information includes at least one of a color, a metallicity, and a roughness.

A second aspect of embodiments of this application provides an image rendering apparatus, and the apparatus includes an intersection module, configured to perform ray tracing-based intersection calculation based on space information of a reflective object and space information of reflected objects to obtain M intersecting points on the reflected objects, where the reflected objects correspond to P pieces of material information, and M ≥ 1; and a shading module, configured to determine, in the M intersecting points, a plurality of intersecting points corresponding to target material information, and perform shading based on the target material information and space information of the plurality of intersecting points corresponding to the target material information, to obtain an image of a reflection that is of the reflected object and that is in the reflective object, where the target material information is one of the plurality of pieces of material information.

It may be learned from the foregoing apparatus that, after performing ray tracing-based intersection calculation based on the space information of the reflective object and the space information of the N reflected objects, the GPU can obtain the M intersecting points on the N reflected objects, and the N reflected objects correspond to the P pieces of material information. Then, the GPU determines, in the M intersecting points, all intersecting points corresponding to the target material information, and performs shading based on the target material information and space information of all the intersecting points corresponding to the target material information, to obtain the image of the reflection that is of the reflected object and that is in the reflective object. In the foregoing process, the GPU separates intersection calculation and shading in ray tracing for execution. To be specific, after centrally determining the M intersecting points, for a specific piece of material information in the P pieces of material information, the GPU may determine all intersecting points corresponding to the material information, and complete shading operations corresponding to these intersecting points. Therefore, the GPU no longer needs to use the material information in a subsequent shading operation corresponding to a remaining intersecting point in the M intersecting points. In this way, a quantity of times that any piece of material information is swapped in and out between a memory and a cache can be effectively reduced, thereby reducing a memory bandwidth and optimizing performance of an electronic device.

In a possible implementation, the target material information is an i^{th} piece of material information, an initial value of i is 1, and the shading module includes a shading sub-module, configured to determine, in the M intersecting points, a plurality of intersecting points corresponding to the i^{th} piece of material information, and perform shading based on the i^{th} piece of material information and space information of the plurality of intersecting points corresponding to the i^{th} piece of material information; and a repetition sub-module, configured to let i = i + 1, and re-trigger the shading sub-module, until i = P, to obtain the image of the reflection that is of the reflected object and that is in the reflective object. In the foregoing implementation, after performing ray tracing-based intersection calculation based on the space information of the reflective object and the space information of the N reflected objects, the GPU can obtain the M intersecting points on the N reflected objects, and the N reflected objects correspond to the P pieces of material information. Then, in the M intersecting points, the GPU determines an intersecting point corresponding to a 1^{st} piece of material information, and performs shading based on the 1^{st} piece of material information and space information of the intersecting point corresponding to the 1^{st} piece of material information. Then, the GPU may also perform, on a 2^{nd} piece of material information, an operation same as that performed on the 1^{st} piece of material information, until the operation same as that performed on the 1^{st} piece of material information is completed on a P^{th} piece of material information. Therefore, the GPU can successfully obtain the image of the reflection that is of the reflected object and that is in the reflective object by rendering. In the foregoing process, the GPU separates intersection calculation and shading in ray tracing for execution. To be specific, after centrally determining the M intersecting points, for any of the P pieces of material information, the GPU may determine all intersecting points corresponding to the material information, and complete shading operations corresponding to these intersecting points. Therefore, the GPU no longer needs to use the material information in a subsequent shading operation corresponding to a remaining intersecting point in the M intersecting points. In this way, a quantity of times that any piece of material information is swapped in and out between a memory and a cache can be effectively reduced, thereby reducing a memory bandwidth and optimizing performance of an electronic device.

In a possible implementation, the shading sub-module includes a shading unit, configured to: if a reflected object on which a j^{th} intersecting point is located corresponds to the i^{th} piece of material information, perform shading based on the i^{th} piece of material information and space information of the j^{th} intersecting point, to obtain a j^{th} pixel in an image of a reflection in the reflective object, where an initial value of j is 1; and a repetition unit, configured to let j = j + 1, and re-trigger the shading unit, until j = M.

In a possible implementation, the intersection module is configured to determine, based on space information of a camera, the space information of the reflective object, and a bounding volume hierarchy BVH tree, M intersecting points obtained after a ray from the camera passes through the reflective object and acts on the N reflected objects, where the BVH tree is constructed based on the space information of the N reflected objects.

In a possible implementation, the N reflected objects each have a unique serial number in the BVH tree, and the shading unit is configured to: if a serial number of the reflected object on which the j^{th} intersecting point is located is in a serial number of at least one reflected object corresponding to the i^{th} piece of material information, perform shading based on the i^{th} piece of material information and the space information of the j^{th} intersecting point.

In a possible implementation, the apparatus further includes a first rasterization module, configured to perform rasterization based on the space information of the reflective object and material information of the reflective object to obtain an image of the reflective object; a second rasterization module, configured to perform rasterization based on the space information of the N reflected objects and material information of the N reflected objects to obtain images of the N reflected objects; and a fusion module, configured to fuse the image of the reflective object, the images of the N reflected objects, and the image of the reflection in the reflective object to obtain a target image.

In a possible implementation, the space information includes at least one of the following: vertex coordinates, a vertex normal line, and a triangle index.

In a possible implementation, the material information includes at least one of a color, a metallicity, and a roughness.

A third aspect of embodiments of this application provides an electronic device, including a memory and a processor. The memory stores code, the processor is configured to execute the code, and when the code is executed, the electronic device performs the method according to any one of the first aspect or the possible implementations of the first aspect.

A fourth aspect of embodiments of this application provides a computer-readable storage medium, including computer-readable instructions. When the computer-readable instructions are run on a computer, the computer is enabled to perform the method according to any one of the first aspect or the possible implementations of the first aspect.

A fifth aspect of embodiments of this application provides a computer program product, including computer-readable instructions. When the computer-readable instructions are run on a computer, the computer is enabled to perform the method according to any one of the first aspect or the possible implementations of the first aspect.

In embodiments of this application, after performing ray tracing-based intersection calculation based on the space information of the reflective object and the space information of the N reflected objects, the GPU can obtain the M intersecting points on the N reflected objects, and the N reflected objects correspond to the P pieces of material information. Then, in the M intersecting points, the GPU determines the intersecting point corresponding to the 1^{st} piece of material information, and performs shading based on the 1^{st} piece of material information and the space information of the intersecting point corresponding to the 1^{st} piece of material information. Then, the GPU may also perform, on the 2^{nd} piece of material information, the operation same as that performed on the 1^{st} piece of material information, until the operation same as that performed on the 1^{st} piece of material information is completed on the P^{th} piece of material information. Therefore, the GPU can successfully obtain the image of the reflection in the reflective object by rendering. In the foregoing process, the GPU separates intersection calculation and shading in ray tracing for execution. To be specific, after centrally determining the M intersecting points, for any of the P pieces of material information, the GPU may determine all intersecting points corresponding to the material information, and complete shading operations corresponding to these intersecting points. Therefore, the GPU no longer needs to use the material information in a subsequent shading operation corresponding to a remaining intersecting point in the M intersecting points. In this way, a quantity of times that any piece of material information is swapped in and out between a memory and a cache can be effectively reduced, thereby reducing a memory bandwidth and optimizing performance of an electronic device.

### BRIEF DESCRIPTION OF DRAWINGS

FIG. 1 is a schematic diagram of a principle of a ray tracing technology;
FIG. 2 is a schematic diagram of a principle of a rasterization technology;
FIG. 3 is a schematic diagram of a structure of an electronic device according to an embodiment of this application;
FIG. 4 is a schematic flowchart of an image rendering method according to an embodiment of this application;
FIG. 5 is a schematic diagram of a BVH tree according to an embodiment of this application;
FIG. 6 is a schematic diagram of image rendering according to an embodiment of this application;
FIG. 7 is a schematic diagram of a target area according to an embodiment of this application;
FIG. 8 is a schematic diagram of an application example of an image rendering method according to an embodiment of this application; and
FIG. 9 is a schematic diagram of another structure of an image rendering apparatus according to an embodiment of this application.

### DESCRIPTION OF EMBODIMENTS

Embodiments of this application provide an image rendering method and a related device, to effectively reduce a quantity of times that any piece of material information is swapped in and out between a memory and a cache, thereby reducing a memory bandwidth and optimizing performance of an electronic device.

Terms "first", "second", and the like in this specification, claims, and accompanying drawings of this application are used to distinguish between similar objects without having to describe a specific order or sequence. It should be understood that data used in this way may be interchanged under appropriate circumstances, so that the embodiments described herein can be implemented in an order other than that illustrated or described herein. In addition, terms "including" and "having" and any of their variants are intended to cover non-exclusive inclusions. For example, a process, method, system, product, or device that includes a series of steps or modules is not necessarily limited to those steps or modules clearly listed, and may include other steps or modules that are not clearly listed or are inherent to the process, method, product, or device. Names or serial numbers of the steps in this application do not mean that the steps in the method procedures have to be performed in a time/logic order indicated by the names or serial numbers. An execution sequence of named or numbered procedural steps may be changed based on a technical purpose to be implemented, provided that same or similar technical effect can be achieved.

With development of computer technologies, more and more application programs, such as game applications, video applications, or the like, need to display images with fine picture quality on an electronic device. These images are usually obtained by the electronic device by rendering based on a model in a three-dimensional (three dimensional, 3D) scene.

In a conventional image processing method, rasterization processing is usually used to render a 3D scene to obtain an image that can display the 3D scene. However, quality of an image obtained by rendering by using a rasterization technology is usually moderate, and a vivid picture is often difficult to present. For example, it is usually difficult for the image obtained by rendering to truly restore ray reflection effect, ray refraction effect, shadow effect, and the like in a scene. In view of this, a new rendering technology, namely, a ray tracing technology, emerges. Both the ray tracing technology and the rasterization technology are methods used to implement image rendering, and a main purpose of the methods is to project, by shading calculation, an object in 3D space to two-dimensional screen space for display.

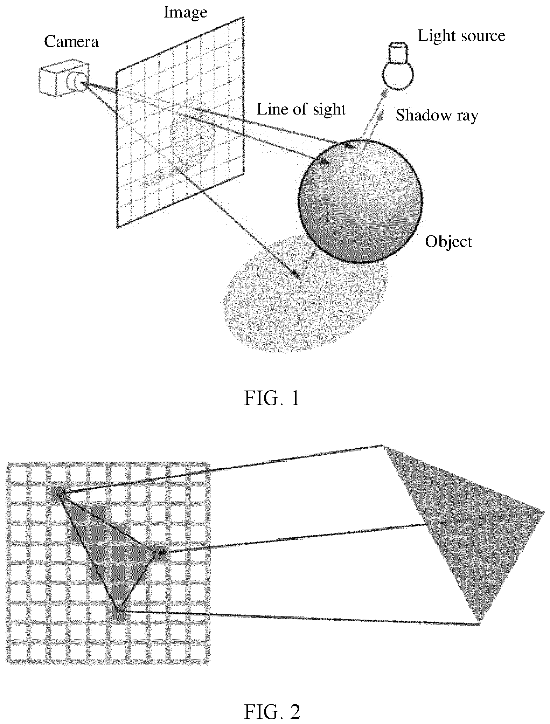

FIG. 1 is a schematic diagram of a principle of a ray tracing technology. As shown in FIG. 1, a principle of ray tracing is as follows: From a position of a camera, a beam of ray is emitted to a three-dimensional scene through a pixel position on an image plane, and a nearest intersecting point between the ray and a geometric pattern is calculated, and then shading of the intersecting point is calculated. If a material of the intersecting point is reflective, tracing may be continued in a reflection direction of the intersecting point, and shading of an intersecting point obtained after reflection continues to be calculated. In other words, a ray tracing method is to calculate a projection and global illumination by tracing a propagation process of a ray in a three-dimensional scene, to obtain a two-dimensional image by rendering.

FIG. 2 is a schematic diagram of a principle of a rasterization technology. As shown in FIG. 2, a principle of rasterization processing is as follows: An object in a three-dimensional scene is segmented by using a triangle, coordinate changes are calculated to convert three-dimensional coordinates of triangle vertices into two-dimensional coordinates on an image, and finally a texture is filled in a triangle on the image to implement rendering of the image.

Because the rasterization technology directly projects, to the screen space, content visible in the screen space to obtain a corresponding image, processing difficulty of the rasterization technology is relatively low, and light and shadow effect provided is also relatively poor. The ray tracing technology implements reflection, refraction, shadow, ambient occlusion, and other real effect by tracing each ray emitted from the camera. Therefore, the ray tracing method can provide real and vivid light and shadow effect. Therefore, to obtain a relatively vivid image by rendering, currently, an electronic device usually uses a rasterization technology in combination with a ray tracing technology to render a three-dimensional scene, to improve viewing experience of a user.

Specifically, after receiving space information of a reflective object (for example, a ground), material information of the reflective object, space information of a plurality of reflected objects (a person, a chair, and the like on the ground), material information of the plurality of reflected objects, and other rendering information of a three-dimensional scene that are sent by a CPU, a GPU may perform intersection calculation by using the space information of the reflective object and the space information of the plurality of reflected objects, to determine a plurality of intersecting points located on the plurality of reflected objects. Each time one intersecting point is determined, the GPU may perform shading based on space information of the intersecting point and material information of a reflected object on which the intersecting point is located. In this way, after shading operations corresponding to all the intersecting points are completed, an image of a reflection in the reflective object (for example, a figure on the ground) can be obtained. At this point, a ray tracing stage in image rendering is completed.

Further, the GPU may further perform rasterization by using the foregoing rendering information of the three-dimensional scene, to obtain an image of the reflective object and images of the plurality of reflected objects. At this point, a rasterization stage in image rendering is completed. Finally, the image of the reflection in the reflective object, the image of the reflective object, and the images of the plurality of reflected objects may be fused to obtain a target image that simulates the three-dimensional scene. The target image includes the images of the objects in the three-dimensional scene and images of reflections in some objects.

However, a cache (cache) of the GPU can usually cache only one piece of material information. In the plurality of reflected objects, some reflected objects may correspond to a same piece of material information. Therefore, when the GPU successively completes the shading operations corresponding to the plurality of intersecting points on the plurality of reflected objects, the same piece of material information is usually frequently swapped in and out between a memory and the cache, resulting in an excessively large memory bandwidth that is difficult for an electronic device to support.

To resolve the foregoing problem, an embodiment of this application provides an image rendering method. The method may be executed by an electronic device. The electronic device includes a CPU and a GPU, and can perform rendering processing on an image. For example, the electronic device may be, for example, a mobile phone (mobile phone), a tablet computer, a notebook computer, a PC, a mobile internet device (mobile internet device, MID), a wearable device, a virtual reality (virtual reality, VR) device, an augmented reality (augmented reality, AR) device, a wireless electronic device in industrial control (industrial control), a wireless electronic device in self driving (self driving), a wireless electronic device in remote medical surgery (remote medical surgery), a wireless electronic device in a smart grid (smart grid), a wireless electronic device in transportation safety (transportation safety), a wireless electronic device in a smart city (smart city), a wireless electronic device in a smart home (smart home), or the like. The electronic device may be a device that runs an Android system, an IOS system, a windows system, and another system. The electronic device may run an application program that needs to render a 3D scene to obtain a two-dimensional image, for example, a game application, a screen lock application, a map application, a monitoring application, or the like.

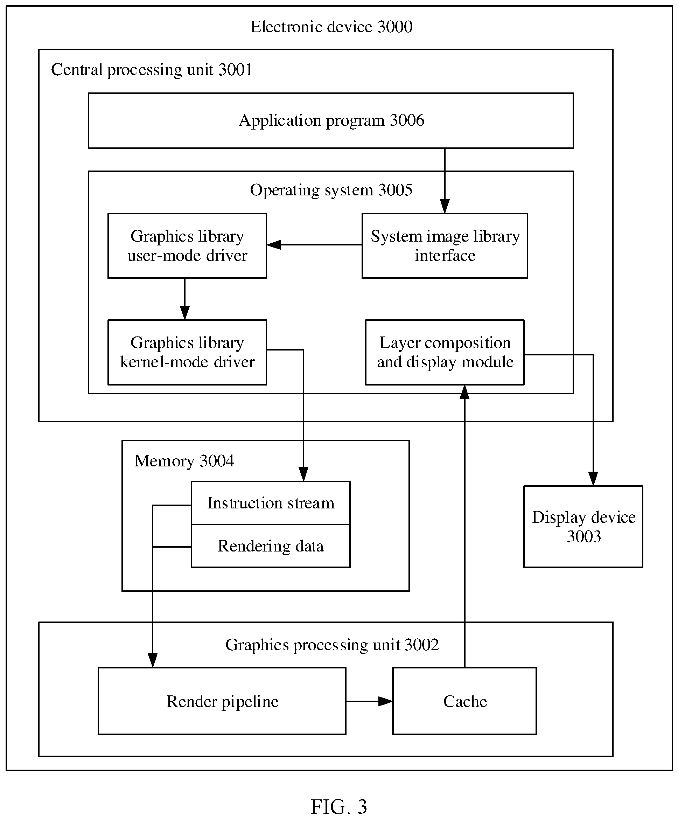

For ease of understanding, the following describes in detail a specific structure of the electronic device with reference to FIG. 3. FIG. 3 is a schematic diagram of a structure of an electronic device according to an embodiment of this application. As shown in FIG. 3, an electronic device 3000 may include a central processing unit 3001, a graphics processing unit 3002, a display device 3003, and a memory 3004. Optionally, the electronic device 3000 may further include at least one communication bus (not shown in FIG. 3), configured to implement connection and communication between components.

It should be understood that the components in the electronic device 3000 may be further coupled by using other connectors, and the other connectors may include various interfaces, transmission lines, buses, or the like. The components in the electronic device 3000 may further be in a radial connection manner in which the central processing unit 3001 is used as a center. In embodiments of this application, coupling indicates mutual electrical connection or communication, including direct connection or indirect connection using another device.

There are also a plurality of connection manners for the central processing unit 3001 and the graphics processing unit 3002, and the central processing unit 3001 and the graphics processing unit 3002 are not limited to the manner shown in FIG. 2. The central processing unit 3001 and the graphics processing unit 3002 in the electronic device 3000 may be located on a same chip, or may be separately independent chips.

The following briefly describes functions of the central processing unit 3001, the graphics processing unit 3002, the display device 3003, and the memory 3004.

The central processing unit 3001 is configured to run an operating system 3005 and an application program 3006. The application program 3006 may be a graphics application program, for example, a game, a video player, or the like. The operating system 3005 provides a system graphics library interface. By using the system graphics library interface and a driver program that is provided by the operating system 3005, for example, a graphics library user-mode driver and/or a graphics library kernel-mode driver, the application program 3006 generates an instruction stream used to render graphics or image frames and generates required related rendering data. A system graphics library includes but is not limited to an embedded open graphics library (open graphics library for embedded system, OpenGL ES), the khronos platform graphics interface (the khronos platform graphics interface), Vulkan (a cross-platform drawing application programming interface), or the like. The instruction stream includes a series of instructions, and these instructions are usually instructions for invoking system graphics library interfaces.

Optionally, the central processing unit 3001 may include at least one of the following types of processors: an application processor, one or more microprocessors, a digital signal processor (digital signal processor, DSP), a microcontroller unit (microcontroller unit, MCU), an artificial intelligence processor, or the like.

The central processing unit 3001 may further include a necessary hardware accelerator, such as an application-specific integrated circuit (application specific integrated circuit, ASIC), a field programmable gate array (field programmable gate array, FPGA), or an integrated circuit configured to implement a logical operation. The processing unit 3001 may be coupled to one or more data buses and configured to transmit data and instructions between the components of the electronic device 3000.

The graphics processing unit 3002 is configured to receive a graphics instruction stream sent by the processing unit 3001, generate a rendering target by using a render pipeline (pipeline), and display the rendering target on the display device 3003 by using a layer composition and display module of the operating system. The render pipeline may also be referred to as a render flowline, a pixel flowline, or a pixel pipeline, and is a parallel processing unit that is inside the graphics processing unit 3002 and that is configured to process a graphics signal. The graphics processing unit 3002 may include a plurality of render pipelines, and the plurality of render pipelines may process graphics signals in parallel independent of each other. For example, the render pipeline may execute a series of operations in a graphics or image frame rendering process, and typical operations may include vertex processing (Vertex Processing), primitive processing (Primitive Processing), rasterization (Rasterization), fragment processing (Fragment Processing), and the like.

Optionally, the graphics processing unit 3002 may include a general-purpose graphics processing unit for software execution, such as a GPU, a dedicated graphics processing unit of another type, or the like.

The display device 3003 is configured to display various images generated by the electronic device 3000. The images may be graphical user interfaces (graphical user interface, GUI) of an operating system or image data (including still images and video data) processed by the graphics processing unit 3002.

Optionally, the display device 3003 may include a display of any suitable type, for example, a liquid crystal display (liquid crystal display, LCD), a plasma display, or an organic light-emitting diode (organic light-emitting diode, OLED) display.

The memory 3004 is a transmission channel between the central processing unit 3001 and the graphics processing unit 3002, and may be a double data rate synchronous dynamic random access memory (double data rate synchronous dynamic random access memory, DDR SDRAM) or a cache of another type.

The foregoing describes a specific structure of an electronic device to which the image rendering method provided in this embodiment of this application is applied. The following describes in detail a process of the image rendering method provided in this embodiment of this application. Several terms described below are first explained:
Offscreen render pass (offscreen render pass): An image obtained by rendering by using the pass is usually an image that temporarily does not need to be displayed on a screen. The image may be stored in a framebuffer (framebuffer) allocated to the offscreen render pass. The framebuffer may be referred to as an offscreen render buffer, and is configured to store an image that temporarily does not need to be displayed on a screen. In this application, the offscreen render pass may be configured to implement a ray tracing technology.

Onscreen render pass (onscreen render pass): An image obtained by rendering by using the pass is usually an image to be displayed on a screen (an image to be presented). The image may be stored in a framebuffer (framebuffer) allocated to the onscreen render pass. The framebuffer may be referred to as an onscreen render buffer, and is configured to store an image to be displayed on a screen. In this application, an onscreen render pass may be configured to implement a rasterization technology.

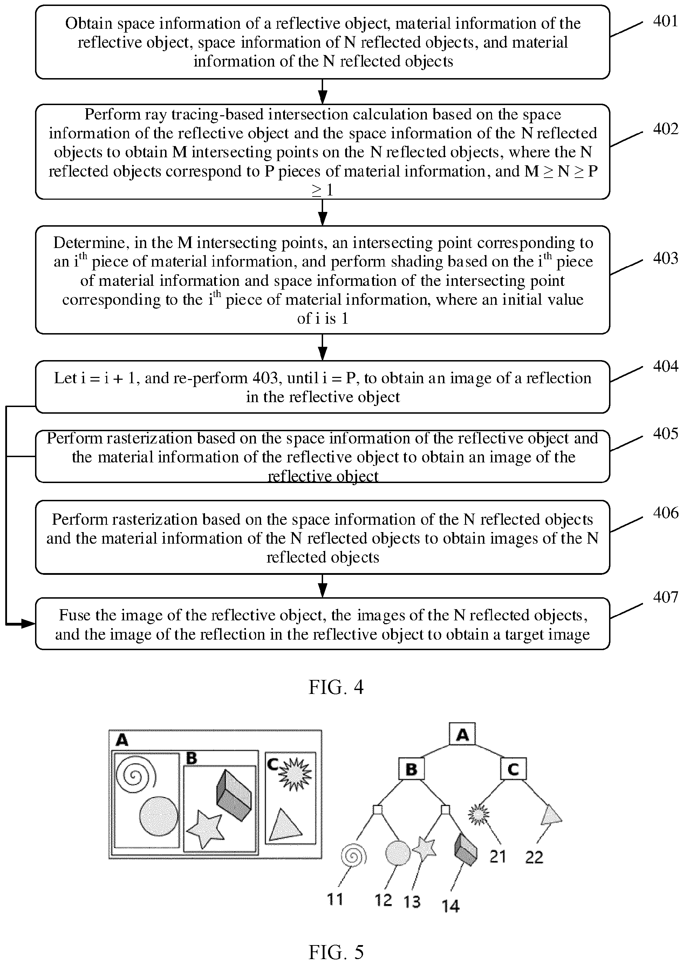

FIG. 4 is a schematic flowchart of an image rendering method according to an embodiment of this application. As shown in FIG. 4, the method includes the following steps.

401: Obtain space information of a reflective object, material information of the reflective object, space information of N reflected objects, and material information of the N reflected objects.

After obtaining a model file of a three-dimensional scene, a CPU of an electronic device may parse out rendering information of each object in the three-dimensional scene. The rendering information of each object includes space information of the object and material information of the object. The space information of the object includes vertex coordinates of the object, a vertex normal line of the object, a triangle index, and the like. The material information of the object includes a color of the object, a metallicity of the object, a roughness of the object, and the like. It may be understood that material information of different objects may be a same piece (type) of material information (in other words, different objects correspond to a same piece of material information), or may be a plurality of pieces (types) of material information (in other words, different objects correspond to a plurality of pieces of material information). It may be learned that a quantity of objects is usually greater than or equal to a quantity of pieces of material information. For example, it is assumed that the three-dimensional scene includes a ground, a person, a chair, and a table, and the chair and the table are made of a same material. In this case, material information of the ground is material information A, material information of the person is material information B, and material information of both the chair and the table is material information C.

After obtaining the material information of the object, the CPU may determine a category of the object based on the material information of the object. Specifically, after obtaining material information of a specific object, the CPU may determine, based on a metallicity of the object, whether the object is a reflective object. If the metallicity of the object is greater than or equal to a preset threshold, the CPU may determine that the object is a reflective object. If the metallicity of the object is less than the preset threshold, the CPU may determine that the object is a reflected object. For example, metallicities of a ground, a mirror, a lake, and the like are usually greater than the preset threshold, and therefore these objects may be referred to as reflective objects; and metallicities of a person, a table, and the like are usually less than the preset threshold, and therefore these objects may be referred to as reflected objects. In this way, the CPU may classify all objects in the three-dimensional scene into two types of objects, namely, a reflective object and a reflected object.

For ease of description, the following provides a schematic description by using a case in which the three-dimensional scene includes only one reflective object and a plurality of reflected objects. After determining the reflective object and all reflected objects in the three-dimensional scene, the CPU may construct a BVH tree based on space information of all the reflected objects, and the BVH tree may be used to implement a subsequent ray tracing operation. Specifically, the CPU may construct the BVH tree based on vertex coordinates, vertex normal lines, and triangle indexes of the reflected objects. It may be understood that the BVH tree includes space information of a plurality of bounding boxes. Space information of each bounding box includes coordinates of eight vertices of the bounding box (cuboid) and vertical heights of the eight vertices. Each bounding box is used to enclose at least one reflected object. To further understand the foregoing BVH tree, the following provides a further description with reference to FIG. 5. FIG. 5 is a schematic diagram of a BVH tree according to an embodiment of this application. As shown in FIG. 5, it is assumed that six reflected objects exist in a three-dimensional scene. Based on space information of the six reflected objects, space information of a bounding box A (enclosing the six objects) may be determined. Based on space information of four of the reflected objects, space information of a bounding box B (enclosing the four objects) may be determined. Based on space information of the other two of the reflected objects, space information of a bounding box C (enclosing the two objects) may be determined. The space information of the bounding box A, the space information of the bounding box B, and the space information of the bounding box C are managed by using a binary tree structure to obtain the BVH tree. It may be learned that the BVH tree can centrally manage the space information of the bounding box A, the bounding box B, and the bounding box C. This is equivalent to centrally managing the bounding box A, the bounding box B, and the bounding box C. The bounding box A is a largest bounding box among all the bounding boxes. It should be noted that each of the six reflected objects has a unique serial number in the BVH tree. As shown in FIG. 5, from left to right, the six reflected objects are sequentially numbered 11, 12, 13, 14, 21, and 22.

When a GPU of the electronic device implements ray tracing based on the BVH tree, whether a ray intersects a reflected object in the three-dimensional scene needs to be calculated (that is, intersection calculation is needed). Due to existence of the BVH tree, the GPU may determine, based on the BVH tree, a specific bounding box that encloses the reflected object, and then determine whether the ray intersects the bounding box. If the ray does not touch the bounding box, it indicates that the ray definitely does not intersect the reflected object in the bounding box. If the ray touches the bounding box, whether the ray intersects the reflected object in the bounding box is further calculated. For example, when it is detected that a ray does not intersect the bounding box B in the binary tree, it indicates that the ray definitely does not intersect the four reflected objects in the bounding box B. Therefore, a step of detecting whether the ray intersects the four reflected objects in the bounding box B may be omitted, so that only whether the ray intersects the two reflected objects in the bounding box C is detected.

In addition, the CPU may further obtain space information of a camera, and the camera is configured to photograph a target image that simulates the three-dimensional scene. The space information of the camera may include a vertical height of the camera and coordinates of the camera.

After obtaining rendering information of the reflective object (including the space information of the reflective object and the material information of the reflective object), rendering information of all the reflected objects (including the space information of all the reflected objects and material information of all the reflected objects), the BVH tree, and the space information of the camera, the CPU sends this part of information to the GPU, so that the GPU performs image rendering based on this part of information.

402: Perform ray tracing-based intersection calculation based on the space information of the reflective object and the space information of the N reflected objects to obtain M intersecting points on the N reflected objects, where the N reflected objects correspond to P pieces of material information, and M ≥ N ≥ P ≥ 1.

403: Determine, in the M intersecting points, an intersecting point corresponding to an i^{th} piece of material information, and perform shading based on the i^{th} piece of material information and space information of the intersecting point corresponding to the i^{th} piece of material information, where an initial value of i is 1.

404: Let i = i + 1, and re-perform 403, until i = P, to obtain an image of a reflection in the reflective object.

After obtaining the rendering information of the reflective object (including the space information of the reflective object and the material information of the reflective object), the rendering information of all the reflected objects (including the space information of all the reflected objects and the material information of all the reflected objects), the BVH tree, and the space information of the camera, the GPU may perform image rendering based on this part of information.

It should be noted that, the image rendering performed by the GPU includes two stages: a ray tracing stage (to be specific, step 402 to step 404 in this embodiment) and a rasterization stage (to be specific, step 405 and step 406 in this embodiment). The ray tracing stage includes two sub-stages. A first sub-stage is intersection calculation, and a second sub-stage is shading. The GPU may fully separate the two sub-stages, to optimize an entire ray tracing process.

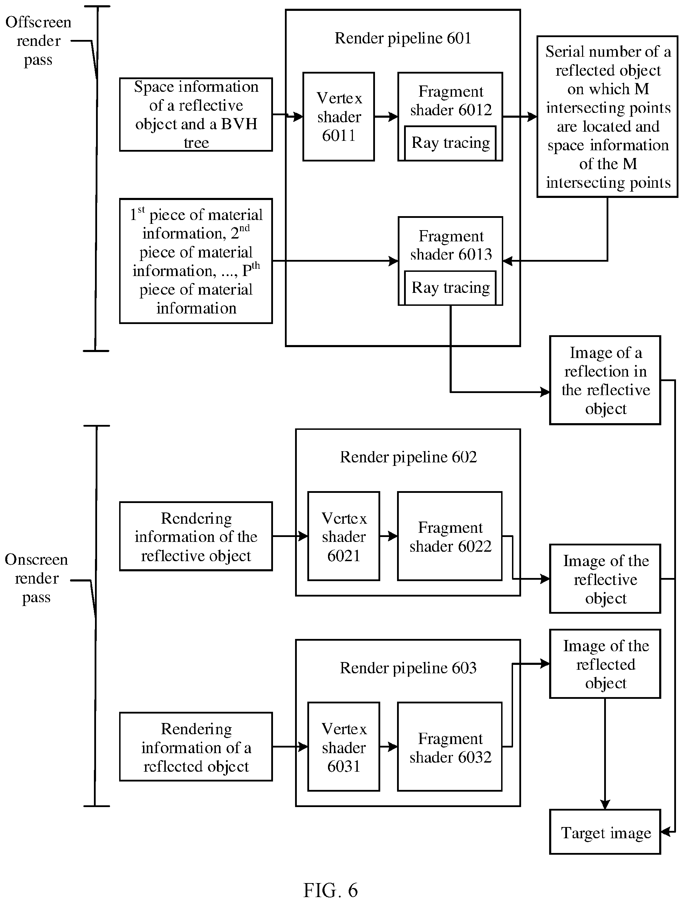

To facilitate understanding of a process in which the GPU implements ray tracing, the following specifically describes the foregoing ray tracing process with reference to FIG. 6. FIG. 6 is a schematic diagram of image rendering according to an embodiment of this application. As shown in FIG. 6, the GPU provides an offscreen render pass with a render pipeline 601. The render pipeline 601 includes a vertex shader (vertex shader, VS) 6011, a fragment shader (frag shader, FS) 6012, and a fragment shader 6013. The fragment shader 6012 is provided with a part that is in a ray tracing algorithm and that is related to intersection calculation, and the fragment shader 6013 is provided with a part that is in the ray tracing algorithm and that is related to shading. Therefore, the fragment shader 6012 and the fragment shader 6013 may be jointly configured to implement ray tracing.

Based on this, the following separately describes the two sub-stages of ray tracing.
(1) The GPU may process the space information of the reflective object and the BVH tree by using the vertex shader 6011 and the fragment shader 6012. To be specific, the two shaders are used to perform ray tracing-based intersection calculation based on this information to obtain the M intersecting points on the N reflected objects. It may be understood that the N reflected objects are reflected objects that are in all the reflected objects and that have intersecting points with the ray emitted by the camera. At least one intersecting point exists on each of the N reflected objects. Therefore, M ≥ N ≥ 1. Further, it may be learned based on a correspondence between the foregoing object and the material information that, the N reflected objects correspond to the P pieces (types) of material information, and N ≥ P ≥ 1.

However, if ray tracing-based intersection calculation is performed on the entire reflective object, to be specific, if the camera is used as a light source, a ray is emitted to each vertex of the reflective object, and then route calculation and intersection calculation are performed on each ray, a related calculation amount is considerably large. In addition, not all rays can intersect a reflected object, calculation performed based on an invalid ray (that is, a ray that does not intersect a reflected object) is invalid calculation. It may be understood that, a reflection in the reflective object is actually an image, a mirror, or the like that is of a reflected object and that is in the reflective object. Therefore, in the reflective object, a specific block area including a reflection may be determined as a target area. If a ray is emitted to the target area of the reflective object, this part of ray (valid ray) intersects a reflected object after passing through this area. If a ray is emitted to a remaining area other than the target area in the reflective object, this part of ray does not intersect a reflected object after passing through this area. It may be learned that, if ray tracing-based intersection calculation is performed only on the target area, a calculation amount of ray tracing can be effectively reduced, thereby saving a computing power of the GPU and reducing power consumption of image rendering.

It should be noted that the GPU may determine the target area of the reflective object in the following manner:
The GPU may determine space information of a largest bounding box from the BVH tree, and then determine space information of the target area of the reflective object in the space information of the reflective object based on the space information of the largest bounding box and the space information of the camera. Obtaining the space information of the target area of the reflective object is equivalent to determining the target area of the reflective object. Specifically, any vertex in the largest bounding box is set to be a first target point, and any vertex in the target area of the reflective object is set to be a second target point. Then, the following mathematical relationship exists among the vertical height (H1) of the camera, a vertical height (H2) of the first target point, a distance (X1) between the second target point and the camera, and a distance (X2) between the camera and the first target point: H1/X1 = H2/(X2 - X1). It should be noted that X1 is determined based on the coordinates of the camera and coordinates of the second target point, and X2 is determined based on the coordinates of the camera and coordinates of the first target point.

Because the coordinates of the camera, the vertical height of the camera, the coordinates of the first target point, and the vertical height of the first target point are all known values, only the coordinates of the second target point are unknown values. The space information of the reflective object includes coordinates of each vertex in the reflective object. Therefore, the GPU may determine whether the coordinates of each vertex in the reflective object meet the foregoing mathematical relationship. If coordinates of a specific vertex meet the foregoing mathematical relationship, the vertex is a vertex in the target area of the reflective object. In this way, the reflective object may be divided into the target area and a remaining area other than the target area. Correspondingly, the GPU may also divide the space information of the reflective object into the space information of the target area and space information of the remaining area. However, for the target area and the remaining area, the two areas have same material information (that is, the material information of the reflective object, because the material information of the entire reflective object is uniform).

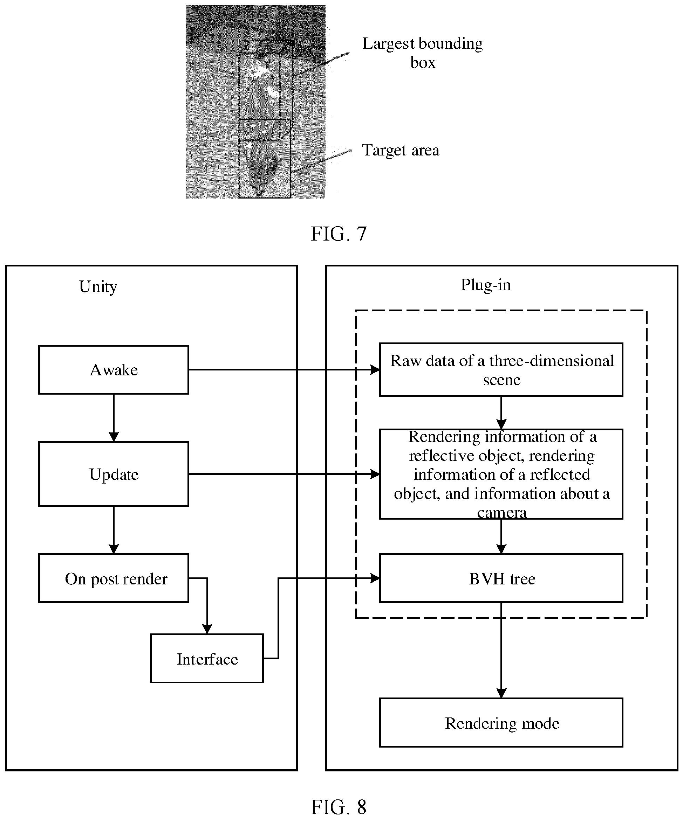

With reference to FIG. 7, the following further describes the foregoing process of determining the target area of the reflective object. FIG. 7 is a schematic diagram of a target area according to an embodiment of this application. As shown in FIG. 7, it is assumed that a three-dimensional scene is as follows: A person stands on a ground and a reflection of the person is on the ground. A largest bounding box in this scene may be first determined, and the largest bounding box is a bounding box that encloses the person. Based on space information of the largest bounding box and the space information of the camera, a target area of the ground may be determined, and the target area includes the reflection of the person.

After the space information of the target area of the reflective object is obtained, the GPU may input the space information of the target area of the reflective object (for example, coordinates of vertices of the reflective object and normal lines of the vertices of the reflective object) into the vertex shader 6011. The vertex shader 6011 may perform specific calculation processing (for example, conversion of three-dimensional coordinates into two-dimensional coordinates) on this part of space information, and input processed space information into the fragment shader 6012. In addition, the GPU further directly inputs the space information of the camera and the BVH tree into the fragment shader 6012. Therefore, the fragment shader 6012 may perform intersection calculation based on the space information of the camera, the processed space information, and the BVH tree, to determine M intersecting points obtained after a ray from the camera passes through the reflective object and acts on the N reflected objects.

After determining the M intersecting points, the GPU may store a serial number of a reflected object on which each intersecting point is located and space information of the intersecting point (the intersecting point is essentially a vertex, and therefore the space information of the intersecting point includes coordinates and a normal line of the vertex and the like).

(2) After obtaining the M intersecting points, the GPU may use the fragment shader 6013 to determine, in the M intersecting points, an intersecting point corresponding to a 1^{st} piece of material information in the P pieces of material information, and perform shading based on the 1^{st} piece of material information and space information of the intersecting point corresponding to the 1^{st} piece of material information. It should be noted that, the GPU may also perform, on a 2^{nd} piece of material information, an operation same as that performed on the 1^{st} piece of material information, until the operation same as that performed on the 1^{st} piece of material information is completed on a P^{th} piece of material information. Therefore, the GPU can successfully obtain an image of the reflection in the reflective object by rendering, for example, an image of the reflection of the person in FIG. 7.

To further understand the foregoing process, the following provides a further description with reference to an example. It is assumed that intersecting point 1, intersecting point 2, intersecting point 3, intersecting point 4, intersecting point 5, and intersecting point 6 exist, where intersecting point 1 and intersecting point 2 are located on reflected object 11, intersecting point 3 and intersecting point 4 are located on reflected object 12, intersecting point 5 is located on reflected object 21, intersecting point 6 is located on reflected object 22, reflected object 11 corresponds to material information 1, reflected object 12 corresponds to material information 2, and reflected object 21 and reflected object 22 correspond to material information 3. Then, the GPU may determine that intersecting points corresponding to material information 1 are intersecting point 1 and intersecting point 2, and shading is performed based on material information 1 and space information of the two intersecting points. Next, the GPU may determine that intersecting points corresponding to material information 2 are intersecting point 3 and intersecting point 4, and shading is performed based on material information 2 and space information of the two intersecting points. Subsequently, the GPU may determine that intersecting points corresponding to material information 3 are intersecting point 5 and intersecting point 6, and shading is performed based on material information 3 and space information of the two intersecting points. In this way, the GPU can obtain an image of the reflection in the reflective obj ect.

It should be noted that, in the M intersecting points, the GPU may obtain one pixel by rendering based on information about one intersecting point (that is, the image of the reflection in the reflective object includes M pixels). In this case, the GPU may render the image of the reflection in the reflective object in the following manner:
The GPU may input the 1^{st} piece of material information in the P pieces of material information and space information of the M intersecting points into the fragment shader 6013. Then, the input fragment shader 6013 may determine whether a reflected object on which a 1^{st} intersecting point in the M intersecting points is located corresponds to the 1^{st} piece of material information. If the reflected object on which the 1^{st} intersecting point is located corresponds to the 1^{st} piece of material information, the fragment shader 6013 performs shading based on the 1^{st} piece of material information and space information of the 1^{st} intersecting point, to obtain a 1^{st} pixel in the image of the reflection in the reflective object. If the reflected object on which the 1^{st} intersecting point is located does not correspond to the 1^{st} piece of material information, the process ends. Afterwards, the fragment shader 6013 may perform, on a 2^{nd} intersecting point, an operation same as that performed on the 1^{st} intersecting point, until the operation same as that performed on the 1^{st} intersecting point is completed on an M^{th} intersecting point.

Then, the GPU may input the 2^{nd} piece of material information in the P pieces of material information and the space information of the M intersecting points into the fragment shader 6013, so that the fragment shader 6013 performs the foregoing process again, until the GPU inputs the P^{th} piece of material information and the space information of the M intersecting points into the fragment shader 6013, and the fragment shader 6013 performs the foregoing process again. In this case, the fragment shader 6013 can obtain the M pixels of the image of the reflection in the reflective object, and this is equivalent to obtaining the image of the reflection in the reflective obj ect.

It should be noted that the fragment shader 6013 may determine, in the following manner, whether a reflected object on which a specific intersecting point is located corresponds to a specific piece of material information:
For any of the P pieces of material information and any of the M intersecting points, the fragment shader 6013 may determine whether a serial number (which may be input by the GPU into the fragment shader 6013) of a reflected object on which the intersecting point is located is in serial numbers (which may be input by the GPU into the fragment shader 6013) of all reflected objects corresponding to the material information. If yes, shading is performed based on the material information and space information of the intersecting point; or if no, the process ends.

After the image of the reflection in the reflective object is obtained, the GPU may complete the ray tracing stage of image rendering.

405: Perform rasterization based on the space information of the reflective object and the material information of the reflective object to obtain an image of the reflective object.

406: Perform rasterization based on the space information of the N reflected objects and the material information of the N reflected objects to obtain images of the N reflected objects.

After obtaining the rendering information of the reflective object (including the space information of the reflective object and the material information of the reflective object), the rendering information of all the reflected objects (including the space information of all the reflected objects and the material information of all the reflected objects), the GPU may further implement the rasterization stage of image rendering based on this information.

To facilitate understanding of a process in which the GPU implements rasterization, the following specifically describes the foregoing rasterization process with reference to FIG. 6. As shown in FIG. 6, the GPU provides an onscreen render pass with two render pipelines, which are respectively a render pipeline 602 and a render pipeline 603. The render pipeline 602 includes a vertex shader 6021 and a fragment shader 6022. The render pipeline 603 includes a vertex shader 6031 and a fragment shader 6032. Both the fragment shader 6022 and the fragment shader 6032 are original fragment shaders (with no algorithm provided inside). Therefore, both the fragment shader 6022 and the fragment shader 6032 may be configured to perform the steps of rasterization. The fragment shader 6022 is configured to perform rasterization on the reflective object, and the fragment shader 6032 is configured to perform rasterization on the reflected objects.

Therefore, the GPU may input the rendering information of the reflective object into the render pipeline 602, so that the render pipeline 602 performs rasterization based on the rendering information of the reflective object, that is, performs rasterization on the reflective object to obtain the image of the reflective object. Specifically, the GPU may input the space information of the reflective object (for example, the coordinates of the vertices of the reflective object) into the vertex shader. The vertex shader 6021 may perform specific calculation processing on this part of space information, and input processed space information into the fragment shader 6022. In addition, the GPU further directly inputs the material information of the reflective object into the fragment shader 6022. Therefore, the fragment shader 6022 may perform a rasterization operation based on the processed space information and the material information of the reflective object, to obtain the image in the reflective object.

The GPU may further input the rendering information of all the reflected objects into the render pipeline 603, so that the render pipeline 603 performs rasterization based on the rendering information of all the reflected objects, that is, performs rasterization on all the reflected objects to obtain the images of all the reflected objects. Specifically, the GPU may input the space information of all the reflected objects (for example, coordinates of vertices of all the reflected objects) into the vertex shader. The vertex shader 6031 may perform specific calculation processing on this part of space information, and input processed space information into the fragment shader 6032. In addition, the GPU further directly inputs the material information of all the reflected objects into the fragment shader 6032. Therefore, the fragment shader 6032 may perform a rasterization operation based on the processed space information and the material information of all the reflected objects, to obtain the images of all the reflected objects. At this point, the GPU successfully obtains, by rendering, the image of the reflective object and the images of all the reflected objects, for example, an image of the ground in FIG. 7 and an image of the person in FIG. 7.

407: Fuse the image of the reflective object, the images of the N reflected objects, and the image of the reflection in the reflective object to obtain a target image.

After obtaining the image of the reflective object, the images of all the reflected objects, and the image of the reflection in the reflective object, the GPU may fuse the image of the reflective object, the images of all the reflected objects, and the image of the reflection in the reflective object, to obtain the target image to be presented. For example, the target image may present the three-dimensional scene shown in FIG. 7, that is, the person stands on the ground, and the reflection of the person is on the ground. Afterwards, the CPU may obtain the target image from an onscreen render buffer, and send the target image to a screen for display, so that a user views the target image.

It should be understood that, in this embodiment, the ray tracing stage and the rasterization stage may be performed synchronously or asynchronously. This is not limited herein. For example, step 402 and step 404 (or step 405) may be performed simultaneously. For another example, step 402 may be performed before step 404 (or step 405). For still another example, step 402 may be performed after step 404 (or step 405).

It should be further understood that, in this embodiment, step 404 and step 405 in the rasterization stage may be performed synchronously or asynchronously. This is not limited herein. For example, step 404 and step 405 may be performed simultaneously. For another example, step 404 may be performed before step 405. For still another example, step 404 may be performed after step 405.

It should be further understood that, in this embodiment, that the three-dimensional scene includes one reflective object is only used for schematic illustration, and does not constitute a limitation on a quantity of reflective objects in the three-dimensional scene. The three-dimensional scene may also include a plurality of reflective objects. Therefore, for any reflective object in the three-dimensional scene, operations same as those in step 401 to step 407 may be performed on both the reflective object and all the reflected objects in the three-dimensional scene. In this case, the target image that simulates the three-dimensional scene can also be obtained.

It should be further understood that, in this embodiment, an example in which each of the P pieces of material information corresponds to at least one of the N reflected objects is only used for description, and a correspondence between a quantity of pieces of material information and a quantity of reflected objects is not limited. For example, if each of the P pieces of material information corresponds to one of the N reflected objects, N = P > 1. For another example, if each of the N reflected objects corresponds to at least one of the P pieces of material information, N < P, and P > 1.

In this embodiment of this application, after performing ray tracing-based intersection calculation based on the space information of the reflective object and the space information of the N reflected objects, the GPU can obtain the M intersecting points on the N reflected objects, and the N reflected objects correspond to the P pieces of material information. Then, in the M intersecting points, the GPU determines the intersecting point corresponding to the 1^{st} piece of material information, and performs shading based on the 1^{st} piece of material information and the space information of the intersecting point corresponding to the 1^{st} piece of material information. Then, the GPU may also perform, on the 2^{nd} piece of material information, the operation same as that performed on the 1^{st} piece of material information, until the operation same as that performed on the 1^{st} piece of material information is completed on the P^{th} piece of material information. Therefore, the GPU can successfully obtain the image of the reflection in the reflective object by rendering. In the foregoing process, the GPU separates intersection calculation and shading in ray tracing for execution. To be specific, after centrally determining the M intersecting points, for any of the P pieces of material information, the GPU may determine all intersecting points corresponding to the material information, and complete shading operations corresponding to these intersecting points. Therefore, the GPU no longer needs to use the material information in a subsequent shading operation corresponding to a remaining intersecting point in the M intersecting points. In this way, a quantity of times that any piece of material information is swapped in and out between a memory and a cache can be effectively reduced, thereby reducing a memory bandwidth and optimizing performance of an electronic device.

In addition, the image rendering method provided in this embodiment of this application may be further described with reference to a specific application example. FIG. 8 is a schematic diagram of an application example of an image rendering method according to an embodiment of this application. As shown in FIG. 8, in this application example, an additional plug-in can be added to a Unity program, and the plug-in is used to implement the method shown in FIG. 4.

Specifically, at an initialization (awake) stage, the program may transfer raw data in a three-dimensional scene to the plug-in. At an update (update) stage of a specific frame of picture, the program may update rendering information of a reflective object, rendering information of a reflected object, space information of a camera, and the like corresponding to the frame of picture based on the raw data, construct a BVH tree based on the rendering information of the reflected object, and then update this part of information to the plug-in. When executing a rendering (on post render) stage, the program invokes the plug-in by using an interface of the plug-in. The plug-in transfers the foregoing information to the GPU. The GPU uses a rendering manner provided by the plug-in to complete rendering to obtain a final target image to be presented.

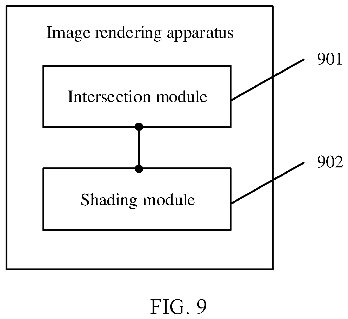

The foregoing describes in detail the image rendering method provided in embodiments of this application. The following describes an image rendering apparatus provided in embodiments of this application. FIG. 9 is a schematic diagram of another structure of an image rendering apparatus according to an embodiment of this application. As shown in FIG. 9, the image rendering apparatus includes:
an intersection module 901, configured to perform ray tracing-based intersection calculation based on space information of a reflective object and space information of a reflected object to obtain M intersecting points on the reflected object, where the reflected object corresponds to P pieces of material information, and M ≥ 1; and
a shading module 902, configured to determine, in the M intersecting points, a plurality of intersecting points corresponding to target material information, and perform shading based on the target material information and space information of the plurality of intersecting points corresponding to the target material information, to obtain an image of a reflection that is of the reflected object and that is in the reflective object, where the target material information is one of the plurality of pieces of material information.

In this embodiment of this application, after performing ray tracing-based intersection calculation based on the space information of the reflective object and the space information of the reflected object, the GPU can obtain the M intersecting points on the reflected object, and the reflected object corresponds to the P pieces of material information. Then, the GPU determines, in the M intersecting points, all intersecting points corresponding to the target material information, and performs shading based on the target material information and space information of all the intersecting points corresponding to the target material information, to obtain the image of the reflection that is of the reflected object and that is in the reflective object. In the foregoing process, the GPU separates intersection calculation and shading in ray tracing for execution. To be specific, after centrally determining the M intersecting points, for a specific piece of material information in the P pieces of material information, the GPU may determine all intersecting points corresponding to the material information, and complete shading operations corresponding to these intersecting points. Therefore, the GPU no longer needs to use the material information in a subsequent shading operation corresponding to a remaining intersecting point in the M intersecting points. In this way, a quantity of times that any piece of material information is swapped in and out between a memory and a cache can be effectively reduced, thereby reducing a memory bandwidth and optimizing performance of an electronic device.

In a possible implementation, the plurality of pieces of material information are P pieces of material information, the target material information is an i^{th} piece of material information, an initial value of i is 1, and the shading module 902 includes a shading sub-module, configured to determine, in the M intersecting points, a plurality of intersecting points corresponding to the i^{th} piece of material information, and perform shading based on the i^{th} piece of material information and space information of the plurality of intersecting points corresponding to the i^{th} piece of material information; and a repetition sub-module, configured to let i = i + 1, and re-trigger the shading sub-module, until i = P, to obtain the image of the reflection that is of the reflected object and that is in the reflective object.

In a possible implementation, the shading sub-module includes a shading unit, configured to: if a reflected object on which a j^{th} intersecting point is located corresponds to the i^{th} piece of material information, perform shading based on the i^{th} piece of material information and space information of the j^{th} intersecting point, to obtain a j^{th} pixel in an image of a reflection in the reflective object, where an initial value of j is 1; and a repetition unit, configured to let j = j + 1, and re-trigger the shading unit, until j = M.

In a possible implementation, the intersection module is configured to determine, based on space information of a camera, the space information of the reflective object, and a bounding volume hierarchy BVH tree, M intersecting points obtained after a ray from the camera passes through the reflective object and acts on the reflected object, where the BVH tree is constructed based on the space information of the reflected object.

In a possible implementation, the reflected object each has a unique serial number in the BVH tree, and the shading unit is configured to: if a serial number of the reflected object on which the j^{th} intersecting point is located is in a serial number of at least one reflected object corresponding to the i^{th} piece of material information, perform shading based on the i^{th} piece of material information and the space information of the j^{th} intersecting point.

In a possible implementation, the apparatus further includes a first rasterization module, configured to perform rasterization based on the space information of the reflective object and material information of the reflective object to obtain an image of the reflective object; a second rasterization module, configured to perform rasterization based on the space information of the reflected object and material information of the reflected object to obtain an image of the reflected object; and a fusion module, configured to fuse the image of the reflective object, the image of the reflected object, and the image of the reflection in the reflective object to obtain a target image.

In a possible implementation, the space information includes at least one of the following: vertex coordinates, a vertex normal line, and a triangle index.

In a possible implementation, the material information includes at least one of a color, a metallicity, and a roughness.

It should be noted that, because content such as information exchanges between the modules/units of the foregoing apparatus and execution processes is based on a same concept as the method embodiments of this application, and technical effect brought by the content is the same as that of the method embodiments of this application. For specific content, refer to the description in the method embodiments illustrated above in embodiments of this application. Details are not described herein again.

An embodiment of this application further relates to a computer-readable storage medium, including computer-readable instructions. When the computer-readable instructions are run on a computer, the computer is enabled to perform the method described in the embodiment shown in FIG. 4.

An embodiment of this application further relates to a computer program product, including computer-readable instructions. When the computer-readable instructions are run on a computer, the computer is enabled to perform the method described in the embodiment shown in FIG. 4.

A person skilled in the art can clearly understand that for ease and brevity of description, for specific working processes of the system, apparatus, and unit described above, refer to the corresponding processes in the foregoing method embodiments. Details are not repeated herein.

In the several embodiments provided in this application, it should be understood that the disclosed system, apparatus, and method may be implemented in other manners. For example, the above-described apparatus embodiments are only schematic. For example, the division of the units is merely a logical function division. In actual implementation, there may be another division manner. For example, a plurality of units or components may be combined or integrated into another system, or some features may be ignored or not executed. In addition, the displayed or discussed mutual coupling or direct coupling or communication connection may be indirect coupling or communication connection of apparatuses or units through some interfaces, and may be in electrical, mechanical, or other forms.

The units described as separate parts may or may not be physically separated, and parts displayed as units may or may not be physical units, that is, may be located in a same place or may be distributed to a plurality of network units. Some or all of the units may be selected according to actual requirements to implement the objectives of the solutions of the embodiments.

In addition, the functional units in embodiments of this application may be integrated into one processing unit, or the units may exist alone physically, or two or more units may be integrated into one unit. The foregoing integrated units may be implemented in a form of hardware, or may be implemented in a form of a software functional unit.

The integrated units may be stored in a computer-readable storage medium if implemented in the form of a software functional unit and sold or used as a standalone product. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes various media that can store program code, such as a USB flash drive, a removable hard disk, a read-only memory (ROM, Read-Only Memory), a random access memory (RAM, Random Access Memory), a magnetic disk, or an optical disc.

## Claims

1. An image rendering method, wherein the method comprises:
S1: performing ray tracing-based intersection calculation based on space information of a reflective object and space information of a reflected object to obtain M intersecting points on the reflected object, wherein the reflected object corresponds to a plurality of pieces of material information, and M ≥ 1; and
S2: determining, in the M intersecting points, a plurality of intersecting points corresponding to target material information, and performing shading based on the target material information and space information of the plurality of intersecting points corresponding to the target material information, to obtain an image of a reflection that is of the reflected object and that is in the reflective object, wherein the target material information is one of the plurality of pieces of material information.

2. The method according to claim 1, wherein the plurality of pieces of material information are P pieces of material information, the target material information is an i^{th} piece of material information, an initial value of i is 1, and S2 comprises:
S21: determining, in the M intersecting points, a plurality of intersecting points corresponding to the i^{th} piece of material information, and performing shading based on the i^{th} piece of material information and space information of the plurality of intersecting points corresponding to the i^{th} piece of material information; and
S22: letting i = i + 1, and re-performing S21, until i = P, to obtain the image of the reflection that is of the reflected object and that is in the reflective object.

3. The method according to claim 2, wherein S21 further comprises:
S211: if a reflected object on which a j^{th} intersecting point is located corresponds to the i^{th} piece of material information, performing shading based on the i^{th} piece of material information and space information of the j^{th} intersecting point, to obtain a j^{th} pixel in an image of a reflection in the reflective object, wherein an initial value of j is 1; and
S212: letting j = j + 1, and re-performing S211, until j = M.

4. The method according to claim 3, wherein S1 further comprises:
determining, based on space information of a camera, the space information of the reflective object, and a bounding volume hierarchy BVH tree, M intersecting points obtained after a ray from the camera passes through the reflective object and acts on the reflected object, wherein the BVH tree is constructed based on the space information of the reflected object.

5. The method according to claim 4, wherein the reflected object each has a unique serial number in the BVH tree, and S211 comprises:
if a serial number of the reflected object on which the j^{th} intersecting point is located is in a serial number of at least one reflected object corresponding to the i^{th} piece of material information, performing shading based on the i^{th} piece of material information and the space information of the j^{th} intersecting point.

6. The method according to any one of claims 1 to 5, wherein the method further comprises:
S4: performing rasterization based on the space information of the reflective object and material information of the reflective object to obtain an image of the reflective object;
S5: performing rasterization based on the space information of the reflected object and material information of the reflected object to obtain an image of the reflected object; and
S6: fusing the image of the reflective object, the image of the reflected object, and the image of the reflection in the reflective object to obtain a target image.

7. The method according to any one of claims 1 to 6, wherein the space information comprises at least one of the following: vertex coordinates, a vertex normal line, and a triangle index.

8. The method according to any one of claims 1 to 7, wherein the material information comprises at least one of a color, a metallicity, and a roughness.

9. An image rendering apparatus, wherein the apparatus comprises:
an intersection module, configured to perform ray tracing-based intersection calculation based on space information of a reflective object and space information of a reflected object to obtain M intersecting points on the reflected object, wherein the reflected object corresponds to P pieces of material information, and M ≥ 1; and
a shading module, configured to determine, in the M intersecting points, a plurality of intersecting points corresponding to target material information, and perform shading based on the target material information and space information of the plurality of intersecting points corresponding to the target material information, to obtain an image of a reflection that is of the reflected object and that is in the reflective object, wherein the target material information is one of the plurality of pieces of material information.

10. The apparatus according to claim 9, wherein the plurality of pieces of material information are P pieces of material information, the target material information is an i^{th} piece of material information, an initial value of i is 1, and the shading module comprises:
a shading sub-module, configured to determine, in the M intersecting points, a plurality of intersecting points corresponding to the i^{th} piece of material information, and perform shading based on the i^{th} piece of material information and space information of the plurality of intersecting points corresponding to the i^{th} piece of material information; and
a repetition sub-module, configured to let i = i + 1, and re-trigger the shading sub-module, until i = P, to obtain the image of the reflection that is of the reflected object and that is in the reflective object.

11. The apparatus according to claim 10, wherein the shading sub-module comprises:
a shading unit, configured to: if a reflected object on which a j^{th} intersecting point is located corresponds to the i^{th} piece of material information, perform shading based on the i^{th} piece of material information and space information of the j^{th} intersecting point, to obtain a j^{th} pixel in an image of a reflection in the reflective object, wherein an initial value of j is 1; and
a repetition unit, configured to let j = j + 1, and re-trigger the shading unit, until j = M.

12. The apparatus according to claim 11, wherein the intersection module is configured to determine, based on space information of a camera, the space information of the reflective object, and a bounding volume hierarchy BVH tree, M intersecting points obtained after a ray from the camera passes through the reflective object and acts on the reflected object, wherein the BVH tree is constructed based on the space information of the reflected object.

13. The apparatus according to claim 12, wherein the reflected object each has a unique serial number in the BVH tree, and the shading unit is configured to: if a serial number of the reflected object on which the j^{th} intersecting point is located is in a serial number of at least one reflected object corresponding to the i^{th} piece of material information, perform shading based on the i^{th} piece of material information and the space information of the j^{th} intersecting point.

14. The apparatus according to any one of claims 9 to 13, wherein the apparatus further comprises:
a first rasterization module, configured to perform rasterization based on the space information of the reflective object and material information of the reflective object to obtain an image of the reflective object;
a second rasterization module, configured to perform rasterization based on the space information of the reflected object and material information of the reflected object to obtain an image of the reflected object; and
a fusion module, configured to fuse the image of the reflective object, the image of the reflected object, and the image of the reflection in the reflective object to obtain a target image.

15. The apparatus according to any one of claims 9 to 14, wherein the space information comprises at least one of the following: vertex coordinates, a vertex normal line, and a triangle index.

16. The apparatus according to any one of claims 9 to 15, wherein the material information comprises at least one of a color, a metallicity, and a roughness.

17. An electronic device, comprising a memory and a processor, wherein the memory stores code, the processor is configured to execute the code, and when the code is executed, the electronic device performs the method according to any one of claims 1 to 8.

18. A computer-readable storage medium, comprising computer-readable instructions, wherein when the computer-readable instructions are run on a computer, the computer is enabled to perform the method according to any one of claims 1 to 8.

19. A computer program product, comprising computer-readable instructions, wherein when the computer-readable instructions are run on a computer, the computer is enabled to perform the method according to any one of claims 1 to 8.
